(19) Europäisches Patentamt / European Patent Office / Office européen des brevets

(11) **EP 2 700 125 B1**

(12) **EUROPEAN PATENT SPECIFICATION**

(45) Date of publication and mention
of the grant of the patent:
**14.06.2017 Bulletin 2017/24**

(51) Int Cl.:
*H01Q 15/00* (2006.01)   *H01Q 21/00* (2006.01)
*G05B 19/418* (2006.01)   *H01Q 3/44* (2006.01)
*H01Q 15/04* (2006.01)   *H01Q 19/06* (2006.01)

(21) Application number: **12773837.5**

(22) Date of filing: **20.04.2012**

(86) International application number:
**PCT/US2012/034472**

(87) International publication number:
**WO 2012/145640 (26.10.2012 Gazette 2012/43)**

(54) **A METAMATERIAL WAVEGUIDE LENS**

METAMATERIAL-WELLENLEITERLINSE

LENTILLE DE GUIDE D'ONDES EN MÉTAMATÉRIAU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.04.2011 US 201161477882 P**
**26.04.2011 US 201161479071 P**

(43) Date of publication of application:
**26.02.2014 Bulletin 2014/09**

(73) Proprietor: **Duke University**
**Durham, NC 27705 (US)**

(72) Inventors:
• **SMITH, David, R.**
**Durham, NC 27707 (US)**
• **KUNDTZ, Nathan**
**Kirkland, WA 98034 (US)**
• **HUNT, John**
**Durham, NC 27701 (US)**

(74) Representative: **D Young & Co LLP**
**120 Holborn**
**London EC1N 2DY (GB)**

(56) References cited:
US-A- 6 040 936          US-A1- 2004 066 251
US-A1- 2009 109 103      US-A1- 2009 218 524
US-A1- 2009 230 333      US-A1- 2009 296 223
US-A1- 2009 296 223      US-A1- 2010 156 573
US-A1- 2010 156 573      US-A1- 2010 266 239
US-A1- 2010 271 284      US-A1- 2010 301 971
US-A1- 2011 026 624      US-B1- 7 724 197
US-B1- 7 724 197

• BERUETE ET AL.: 'Left-handed extraordinary optical transmission through a photonic crystal of subwavelength hole arrays.' OPTICS EXPRESS vol. 14, no. 12, 12 June 2006, pages 2059 - 2062, XP055098585
• ENGHETA ET AL.: 'A Positive Future for Double-Negative Metamaterials' 01 April 2005, UNIVERSITY OF PENNSYLVANIA SCHOLARTY COMMONS DEPARTMENTAL PAPERS, pages 1535 - 1556, XP011130549 Retrieved from the Internet: <URL:http://repository.upenn.edu/cgi/viewcontent.cgi-article=1299&context=ese_papers&sei-redir= 1 &referer>

## Description

### TECHNICAL FIELD

The application discloses apparatus and methods that relate to metamaterials for waveguide lenses such as Rotman lenses.

### Prior art

Prior art document US 7724197 describes a waveguide beam forming lens with per port power dividers. Furthermore, prior art document US20100156573 describes metamaterials for surfaces and waveguides.

### SUMMARY

The subject matter claimed herein is defined in the appended claims.

There is provided, an apparatus, comprising: a parallel plate waveguide providing a Rotman lens having an input port region, an output port region, and a plurality of subwavelength apertures within one or more conducting surfaces of the parallel plate waveguide, the plurality of subwavelength apertures defining complementary metamaterial elements and providing a respective plurality of individual electromagnetic responses; where the plurality of individual electromagnetic responses provides a substantially increased optical distance between the input port region and the output port region, wherein the input port region and the output port region define an optical axis of the apparatus, and the substantially increased optical distance is an optical distance along the optical axis.

There is also provided, a method, comprising: delivering an electromagnetic wave to a first port region of a parallel plate waveguide providing a Rotman lens; and compressing the electromagnetic wave as it propagates within the parallel plate waveguide from the first port region to a second port region by a coupling of the electromagnetic wave to a plurality of subwavelength apertures in a conducting surface of the parallel plate waveguide, wherein the plurality of subwavelength apertures define complementary metamaterial elements and provide a respective plurality of individual electromagnetic responses; where the compressing includes compressing along an axis joining the first port region and the second port region.

A metamaterial waveguide structure is disclosed.

The disclosed metamaterial waveguide structure is compressed along an optical axis using transformation optics techniques, providing a compressed Rotman lens. The disclosed metamaterial waveguide structure includes a plurality of complementary metamaterial elements patterned on a conducting surface of the waveguide.

### BRIEF DESCRIPTION OF THE FIGURES

FIG. 1(a) depicts an exemplary untransformed Rotman lens outline.

FIG. 1(b) depicts an exemplary transformed Rotman lens outline corresponding to a coordinate transformation of the untransformed Rotman lens outline of FIG. 1(a). The transformed region is indicated by the shaded rectangle.

FIG. 1(c) depicts a density plot of permeability in the y-direction ($\mu_y$) for the exemplary transformed Rotman lens outline of FIG. 1(b).

FIG. 1(d) depicts a outline of a fabricated lens corresponding to the exemplary transformed Rotman lens outline of FIG. 1(b), with output transmission lines 1-10 and an exemplary arrangement of C-dipole elements corresponding to the permeability distribution of FIG. 1(c).

FIG. 2(a) depicts an exemplary unit cell (inset) for a complementary dipole ("C-dipole") patterned on a parallel plate transmission line, along with a plot of the real and imaginary retrieved permeability corresponding for this exemplary unit cell as a function of the C-dipole length.

FIG. 2(b) depicts the real and imaginary retrieved permeability corresponding to the exemplary unit cell of FIG. 2(a) as a function of frequency for a C-dipole length of 3 mm, for a TE wave traveling perpendicular to the long dimension of the C-dipole.

FIG. 2(c) depicts the real and imaginary retrieved permeability corresponding to the exemplary unit cell of FIG. 2(a) as a function of frequency for a C-dipole length of 3 mm, for a TE wave traveling parallel to the long dimension of the C-dipole.

FIG. 3(a) depicts phase distributions across the output antennas for three nominal focusing directions, for uncompressed, compressed, and control lenses. The uncompressed lens corresponds to the untransformed Rotman lens outline of FIG. 1(a); the compressed lens corresponds to the transformed Rotman lens outline of FIG. 1(b); the control lens corresponds to the transformed Rotman lens outline of FIG. 1(b) but omits the transformed region.

FIG. 3(b) depicts a fabricated lens corresponding to the exemplary transformed Rotman lens outline of FIGS. 1(b) and 1(d).

FIGS. 4(a) depicts the far-field radiation pattern for the exemplary uncompressed, compressed, and control lenses (as in FIG. 3(a)), for a nominal focusing direction of 0°.

FIG. 4(b) depicts the far-field radiation pattern for the exemplary uncompressed, compressed, and control lenses (as in FIG. 3(a)), for a nominal focusing direction of 15°.

FIG. 4(c) depicts the far-field radiation pattern for the exemplary uncompressed, compressed, and control lenses (as in FIG. 3(a)), for a nominal focusing direction of 30°.

## REFERENCES

[1] S. Weiss A. Zaghloul, O. Kilic and E. D. Adler. Realization of Rotman's concepts of beamformer lenses and artificial dielectric materials. IEEE International Conference on Microwaves, Communications, Antennas and Electronics Systems, page 1, 2009.

[2] N. Kundtz D. Roberts and D. R. Smith. Optical lens compression via transformation optics. Optics Express, 17:16535, 2009.

[3] B. Justice S. Cummer J. Pendry A. Starr D. Schurig, J. Mock and D. Smith. Metamaterial electromagnetic cloak at microwave frequencies. Physical Review Latters, 314:977, 2006.

[4] J. B. Pendry D. Schurig and D. R. Smith. Transformation-designed optical elements. Optics Express, 15:14772, 2007.

[5] 5. R. Gatti R. Sorrentino E. Sbarra, L. Marcaccioli. A novel rotman lens in siw technology. European Microwave Conference, page 1515, 2007.

[6] M. Laso J. Baena J. Bonache M. Beruete R. Marques F. Martyn F. Falcone, T. Lopetegi and M. Sorolla. Babinet principle applied to the design of metasurfaces and metamaterials. Physical Review Letters, 93:1, 2004.

[7] D. Schurig J. B. Pendry and D. R. Smith. Controlling electromagnetic fields. Science, 312:1780, 2006.

[8] T. Zentgraf G. Bartal J. Valentine, J. Li and X. Zhang. Nature Materials, 8:568, 2009.

[9] N. Kundtz and D. R. Smith. Nature Materials, 92:129, 2009.

[10] C. Poitras L. Gabriell, J. Cardenas and M. Lipson. Nature Photonics, 117:461, 2009.

[11] H. Hansenb L. Halla and D. Abbotta. Rotman lens for mm-wavelengths. Proc. of SPIE, 4935:215, 2002.

[12] J. Li and J. B. Pendry. Physical Review Letters, 101:203901, 2008.

[13] L. Musa and M.S. Smith. Microstrip port design and sidewall absorption for printed rotman lenses. IEEE Proceedings, 136:53, 1989.

[14] P. Sharma P. Singhal and R. Gupta. Rotman lens with equal height of array and feed contours. Proc. Of SPIE, 51:2048, 2003.

[15] H. Feng Q. Cheng and T.J. Cui. Broadband planar luneburg lens based on complementary metamaterials. Physical Review Letters, 95:1, 2009.

[16] W. Rotman and R. F. Turner. Wide-angle microwave lens for line source applications. IEEE Transactions on Antennas and Propagation, page 623, 1963.

[17] L. Schulwitz and A. Mortazawi. A new low loss rotman lens design using a graded dielectric substrate. IEEE Transactions on Microwave Theory and Techniques, 56:2734, 2008.

## DETAILED DESCRIPTION

In the following detailed description, reference is made to the accompanying drawings, which form a part hereof. In the drawings, similar symbols typically identify similar components, unless context dictates otherwise. The illustrative embodiments described in the detailed description, drawings, and claims are not meant to be limiting. Other embodiments may be utilized, and other changes may be made, without departing from the spirit or scope of the subject matter presented here.

Microwave lenses are of continuing interest as beam-forming and other quasi-optical elements for imaging and communication applications. The Rotman lens is commonly used in wide-angle, beam-forming applications since its inherent two-dimensional geometry makes it low profile and amenable to printed circuit board fabrication [1, 11, 14, 16]. The Rotman lens generally consists of a parallel plate transmission line with a set of input ports and a set of output ports. Each of the output ports feeds a transmission line (e.g. a microstrip or coaxial waveguide) with a prescribed electrical length that, in turn, feeds an antenna. The relative positions of the input and output ports and the electrical lengths of each output feed are determined by the Rotman lens equations. The solution of these equations is such that when a single input feed is excited, the phase distribution across the antennas produces a collimated beam traveling in the direction determined by the position of the excited port [16]. In order to emulate a substantially reflectionless open boundary around the periphery of the planar lens, the parallel plate region between the input and output ports may be terminated with impedance matched dummy ports. The positions of the dummy ports are not prescribed by the Rotman lens equations and in some approaches these dummy ports are configured in a manner that reduces reflections back into the lens [11, 13].

Implemented using transmission line techniques, the Rotman lens can be extremely thin - e.g., for a circuit board implementation, roughly the thickness of the circuit board substrate. For many applications, however, it may be desirable to further reduce the size of the lens by compressing the structure along the in-plane directions. Such a compression can be achieved by applying the techniques associated with Transformation Optics (TO) [7, 9, 12]. TO provides a means to alter the geometry of an optical or quasi-optical device while, in principle, maintaining substantially the performance and wave properties of the original geometry. Coordinate transformations that achieve the desired design are applied to arrive at a set of spatially varying constitutive parameters; the resulting specified medium then is used to implement the transformation [2]. The permittivity and permeability tensors for a transformed device typically vary spatially and are anisotropic. Though TO designs may be difficult to achieve in general with conventional materials, metamaterials provide the means to implement complex TO media. Some exemplary transformation optical approaches have been described in Pendry et al, "Electromagnetic cloaking method," U.S. Patent Application Publication No. 2008/0024792; Pendry et al, "Electromagnetic compression apparatus, methods, and systems," U. S. Patent No. 7,733,289; and Bowers et al, "Focusing and sensing apparatus, methods, and systems," U.S. Patent Application Publication No. 2009/0296237.

In previous work, the patterning of substrates to form an effective gradient index region within a Rotman lens has been applied as a means of improving overall performance [5, 17]. The introduction of a lattice of air holes in the circuit board material with varying density, for example, results in an isotropic, graded index that can be used to improve the focusing properties of the lens. Such modifications were shown to reduce the power entering the dummy ports, lowering the overall insertion loss of the device and improving the gain at more extreme scan angles [17]. The modified Rotman designs that employ graded index materials make use of multiple fabrication steps to create the necessary material distributions in the substrate material of the transmission line structures The exemplary TO design considered here, like these prior examples, makes use of a graded medium to enable the size reduction of the lens; however, the effective medium has an anisotropic, magnetic response, which does not require a patterned dielectric substrate and is achievable even in approaches where there is no substrate (e.g. in non-PCB implementations wherein the parallel plate transmission line has two conducting surfaces separated by vacuum or air) . In the exemplary TO design, properties of the original Rotman lens are carried over to the size-reduced version, so that no additional lens equations or optimization is needed to achieve the compressed design. An optimized design can be transformed to reduce its size while maintaining its performance. The complementary electric dipole metamaterials used to achieve the effective magnetic response in the exemplary TO design are voids patterned into one of the metal layers of a transmission line structure, and these void patterns may be fabricated (for example) in the same step as the Rotman transmission line structure itself, e.g. using only a single layer circuit board.

In the exemplary approach presented here, a compressed Rotman lens is designed using Transformation Optics (TO). While TO has been used to create exotic electromagnetic media such as "invisibility" cloaks, it has also been applied to modify or improve the operation of more conventional optical devices, such as lenses [3, 4, 8-10, 12]. TO can also be used to decrease the profile of an optical device by applying a coordinate transformation that compresses the space in which the optical device is embedded [2]. For example, a transformation can be chosen that distorts virtual space, described by unprimed coordinates $(x, y, z) = (x_1, x_2, x_3)$, into a desired physical space, described by primed coordinates $(x', y', z') = (x_1', x_2', x_3')$. Physical space represents the actual location and geometry of the device when implemented, through which waves will behave as though propagating in the virtual space. A transformation can be implemented by varying the permittivity $\varepsilon'$ and permeability $\mu'$ tensors throughout the physical space in a manner determined by

$$\varepsilon_{i'j'} = \mu_{i'j'} \quad \frac{A_i^{i'} A_j^{j'}}{\det(A)} \qquad (1)$$

where A is the Jacobian of the transformation and where $A_i^{i'} = dx_i' / dx_j$ .

Arbitrary transformations result in spatial variations in both the permeability and permittivity tensors of a device, usually with independent spatial variations in each of the elements. Since an infinite number of possible transformations over some region will lead to identical input and output fields, there is a great amount of freedom in selecting transformations that produce more readily realized constitutive parameters. In addition, in the short wavelength limit where the spatial variations in the material parameters are small over the length scale of a wavelength, the ray optics approximation becomes valid and only the index of refraction is important in describing wave propagation. Thus an eikonal approximation can be made in which only the index of refraction prescribed by the transformation is maintained and the impedance is ignored.2 For example, for transverse electric (TE) polarization and propagation in the plane perpendicular to the z-axis, the relevant indices are

$$n_x = \sqrt{\mu_y \varepsilon_z}$$
$$n_y = \sqrt{\mu_x \varepsilon_z}. \tag{2}$$

We can then define:

$$\varepsilon_z' = 1$$
$$\mu_y' = \mu_y \varepsilon_z \tag{3}$$
$$\mu_z' = \mu_x \varepsilon_z$$

such that the indices are maintained but only the permeability in the plane of propagation need be controlled. This is the case relevant to a Rotman lens because propagation in the parallel plate region of the lens is TE and in-plane. It is important to note that when the eikonal approximation for a transformation is employed, the structure may not be inherently impedance matched. Thus, even though the transformation is valid in the ray optics regime, scattering may occur at the boundaries of the transformed region. In some approaches this scattering can be alleviated by choice of transformation; certain transformations will more gradually transition from the input and output ports, producing less overall scattering.

To reduce the overall size of the exemplary compressed Rotman lens, we transform the space within the parallel plate region of the Rotman lens. The exemplary transformation is contained entirely within the boundaries of the lens so that the input and output contours are the same as obtained from the Rotman lens equations but shifted towards one another by an amount determined by the transformation.

The exemplary transformation implemented here is parabolic in the coordinate along the optical axis of the lens and compresses space along the optical axis (x-axis) of the Rotman lens. The transformation is achieved in such a manner that the constitutive parameters approach their free space values at the boundaries of the transformed region. The exemplary transformation is given by

$$\frac{dx'}{dx}(x) = \begin{cases} (1-c)\left(\dfrac{2x-l_1-l_2}{l_1-l_2}\right)^2 + c & , \ l_1 < x < l_2 \\ 1 & , \ x \le l_1 \text{ or } x \ge l_2 \end{cases} \tag{4}$$

where $c \in [0,1]$ is a free parameter that controls the degree of compression. $l_1$ and $l_2$ are the boundaries of the transformation in virtual, untransformed, space. The degree of compression is constrained by the realizable material parameters, with larger compressions requiring larger material parameters.

This expression can be integrated to determine the coordinate map,

$$x'(x) = \begin{cases} \dfrac{(1-c)}{6(l_1-l_2)^2}(2x-l_1-l_2)^3 + cx + x_0 & , \ l_1 < x < l_2 \\ l_1' \ (x \ l_1) \ + \ - & , \ x \le l_1 \\ l_2' + (x-l_2) & , \ x \ge l_2 \end{cases} \tag{5}$$

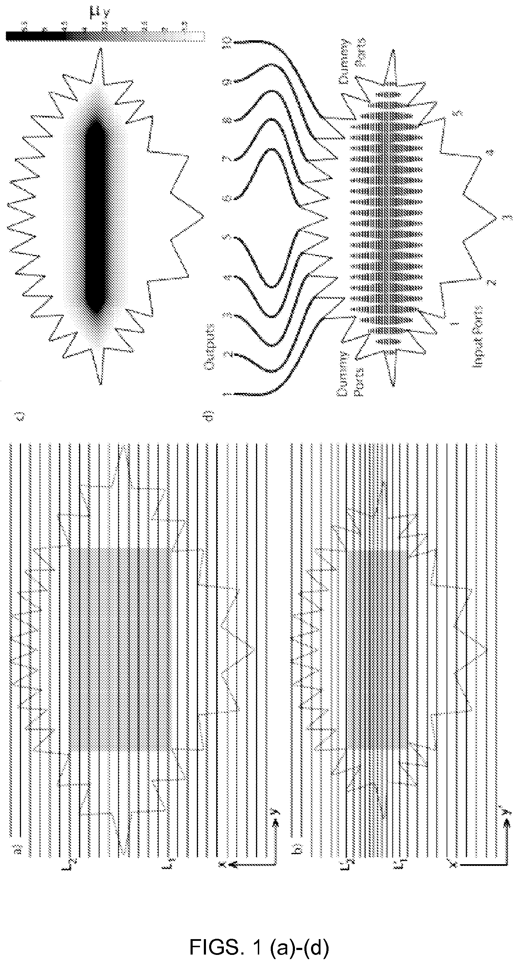

where $x_0$ is a constant that determines the translation of the transformed region. This transformation and the transformed Rotman lens outline are shown in FIGS. 1(a)-(b).

The transformation of Eqn. (5) implies a set of constitutive tensor elements that satisfy $\varepsilon_z(x) = \mu_y(x) = 1/\mu_x(x)$. In order to simplify the fabrication of the lens, an eikonal approximation of the form given in Eqn. (3) may be used. The approximated material parameters are then, $\varepsilon_z' = \mu_x' \quad 1, \; \mu_y' \quad \mu_y^2$. In this approach, only the permeability in the y-direction, perpendicular to the optical axis and in the plane of the parallel plates, needs to be controlled. In many material systems, controlling the permeability can be difficult, especially if broad-band and low-loss behavior is desired. In the exemplary design presented here, we resolve this difficulty by taking advantage of the transmission line geometry of the Rotman lens and use complementary metamaterials to achieve the desired permeability.

Complementary metamaterials are planar metamaterials or metasurfaces, where the metal and dielectric comprising the material unit cell have been exchanged as compared with bulk metamaterials. Various complementary metamaterials are described in Smith et al, "Metamaterials for surfaces and waveguides," U.S. Patent Application Publication No. 2010/0156573.

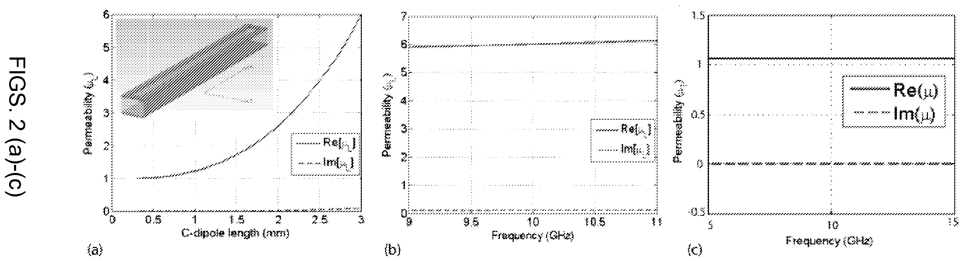

An example of a complementary metamaterial unit cell is depicted in Fig. 2, which shows (as inset of Fig. 2(a)) the unit cell for a complementary electric dipole (C-Dipole) as a slot cut into a metal sheet. By the Babinet principle, these structures exhibit the dual material response to their bulk counterparts; so, the C-dipole gives rise to an effective magnetic response, allowing for the control of permeability. Furthermore, since the C-Dipoles are non-resonant, their magnetic response can have a broad frequency bandwidth, be anisotropic, and exhibit low-loss. Fig. 2 shows the effective permeability, retrieved from simulations, of the C-dipole structure used in the exemplary fabricated lens (the unit cell used in the fabricated lens was 300 $\mu$m wide patterned in 17 $\mu$m thick copper on a 200 $\mu$m FR4 substrate). The permittivity for all frequencies and propagation directions is equal to the substrate permittivity. The maximum achievable permeability is limited by the maximum length of the of the C-dipole, which is in turn constrained by the operating wavelength such that an effective medium approximation is valid, and by the minimum feature size that is consistent with the fabrication technique. Increasing the C-dipole area density (e.g. by using a lithographic technique that supports smaller features) can increase the range of attainable permeabilities. In some approaches the range of attainable permeabilities may be increased by disposing a magnetic material (such as a ferrite) adjacent to the complementary metamaterial elements (e.g. within apertures defining the complementary metamaterial elements).

The eikonal approximation is useful in some approaches because it simplifies the material parameters and the device fabrication. It may however introduce reflections that would be not exist were the full material parameters corresponding to the exact transformation implemented. By choosing a transformation for which the gradient smoothly goes to one at the boundaries of the transformed region, in this case a parabolic transformation, these reflections are substantially diminished. Furthermore, in the example presented here, the transformation is truncated in the y-direction (see the shaded rectangle in Fig. 1(a)). To reduce reflections from a truncation boundary, the permeability is linearly graded in the y-direction from the value at the boundary of the transformation to unity. This does not correspond to a true transformation of the field in these regions, and the phase entering the dummy ports is modified as compared to the untransformed lens.

The exemplary uncompressed lens was designed for 10 GHz operation using the Rotman lens equations with angular range $\alpha$ of $\pm 30°$ and focal length, F, of 0.1 meter. Five input ports and ten output ports were used. The nominal focusing directions for the input ports were -30°, -15°, 0°, +15°, and +30°. The free parameter g in the Rotman design equations was set to value of $1 + \alpha^2 / 2$, where $\alpha = 30°$, as recommended by Rotman and Turner. 16 The dummy port positions were determined by placing them along the lines tangent to the extremes of the input and output contours. The exemplary compressed lens was then obtained from this design by shifting the input and output boundaries toward each other according to Eqn. (5), where c=0.41was chosen such that our maximum permeability was equal to our maximum achievable (the degree of compression could be increased by using a lithographic technique that supports smaller features). This shift of the boundaries corresponded to a 27% decrease in the length of the Rotman lens along the optical axis. The dummy port positions for the transformed lens were determined in the same manner as for the untransformed lens. The region between $l_1$ and $l_2$ was then patterned with C-dipoles to achieve the anisotropic index corresponding to Eqn. (4) and Eqn. (3) by interpolating Fig. 2 for the appropriate length of the C-dipole. A control lens was also designed such that the boundaries of the lens were identical to the compressed lens but the material parameters required to implement the transformation were omitted.

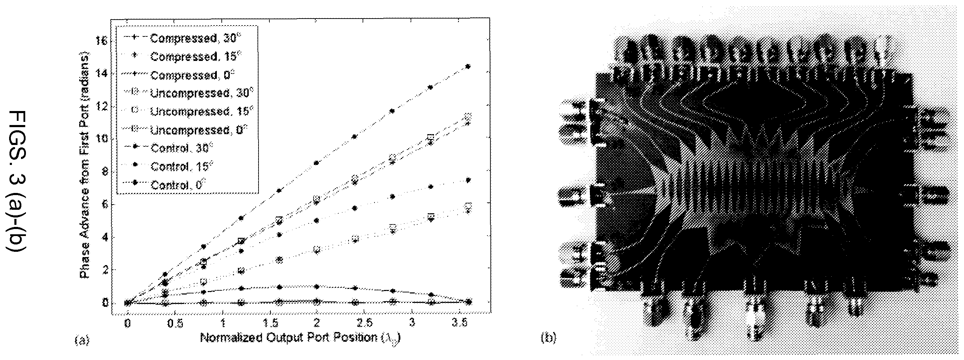

Fig. 3 shows the analytical phase distribution across the output ports for the exemplary uncompressed, compressed and control lens. While the ideal phase distribution is not exactly preserved through the transformation, it is much closer to the ideal phase distribution than the control phase distribution. The control lens shows a shift in the phase slope, which corresponds to a shift in the propagation direction, as well as a deviation from linearity, which corresponds to defocusing of the beam.

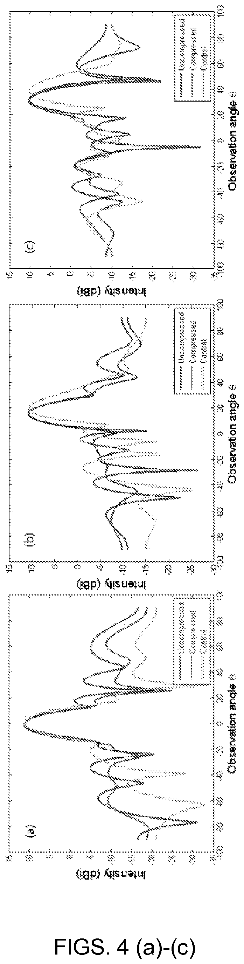

The uncompressed, compressed, and control lenses were fabricated on 0.2mm FR4 using standard circuit board fabrication techniques. An Agilent E8364B PNA Series network analyzer was used to measure the multi-port scattering matrix from which the output phase distribution, far-field pattern, and loss characteristics were calculated. The far-field radiation pattern, as depicted in Fig. 4, was calculated by assuming the output ports of the lenses feeds an array of matched perfect line sources.

As expected from the analytic phase distributions, the control lens shows both a wider beam and a divergence from the nominal focusing direction. The transformed lens, on the other hand, substantially preserves the width and direction of the uncompressed beam, though some mismatch in the side lobes is seen. The beam full-width-at-half-max (FWHM) for the uncompressed and compressed lenses is $17°_{FBHM}$ for all nominal focusing directions while the control lens FWHM is $19°_{FBHM}$ for the 0° nominal focusing direction and $20°_{FBHM}$ for the 15° and 30° nominal focusing directions. While the true focusing directions for the uncompressed and compressed lenses are exactly equal to the nominal directions, the control lens shows deviation with increasing nominal direction. The deviation from the nominal focusing direction for the control lens is 0°, 5°, and 10° for the 0°, 15°, and 30° nominal directions, respectively. This is summarized in the following table:

Table 1: FWHM/($\theta_{actual}$ - $\theta_{nominal}$) for each lens and for each nominal focusing direction.

| Focusing direction | $0°_{nominal}$ | $15°_{nominal}$ | $30°_{nominal}$ |
| --- | --- | --- | --- |
| Uncompressed | 17°/0° | 17°/0° | 17°/0° |
| Compressed | 17°/0° | 17°/0° | 17°/0° |
| Control | 19°/0° | 20°/5° | 20°/10° |

The variation in the side lobes is caused by reflections at the boundaries of the transformation region due to the eikonal approximation and truncation of the transformation in the $\gamma$-direction. The transformed lens shows a larger average return loss ($P_{incident}/P_{reflected}$) of 5.674dB compared to 6.484dB for the untransformed lens, and a radiative loss ($P_{incident}/P_{radiated}$) due to the C-dipoles of 9.01dB. The increased return loss is due to reflections introduced by the eikonal approximation. These losses both contribute to an average insertion loss of 1.448dB.

While the preceding example has presented a compressed version of a Rotman lens, the approaches described herein may be used to axially compress other structures, such as non-Rotman bootlace-type lenses, planar Luneberg lenses, or other waveguide lenses.

While the preceding example has presented a particular coordinate transformation (i.e. a parabolic compression along the optical axis), the choice of coordinate transformation is not unique and other embodiments may employ other coordinate transformations. For example, other embodiments may provide a coordinate transformation that extends into the ports regions of the parallel plate waveguide, or that flattens the curvature of the input port region and/or the output port region (e.g. to allow a further diminishing of the spatial extent of the parallel plate waveguide along the optical axis), or that provides a further compression along a direction perpendicular to the optical axis, or any combination thereof. Other embodiments may provide an adjustable coordinate transformation (this may be implemented, for example, using metamaterial elements that are adjustable to provide correspondingly adjustable effective medium parameters, e.g. as described in Smith et al, "Metamaterials for surfaces and waveguides," previously cited). An adjustable coordinate transformation could be used, for example, to provide fine steering of the output beam, by providing an apparent location of an input port intermediate two actual input port locations.

Moreover, in some approaches, the effective medium provided in the parallel plate waveguide need not correspond to a pure coordinate transformation. For example, the effective medium may provide a coordinate transformation region that is truncated to some extent (e.g. at the left and right edges of the shaded rectangle in Fig. 1(b)), preceded and/or succeed by an impedance matching layer (IML) (e.g. as described in Smith et al, "Metamaterials for surfaces and waveguides," previously cited), etc. As another example, the effective medium could provide additional index gradients to steer power away from dummy ports to reduce the insertion loss and to correct the aberrations seen at the off-focus ports.

While the preceding example has used an eikonal approach to reduce the number of effective constitutive parameters to one (the permeability in the y-direction, $\mu_y$), other embodiments need not rely on this eikonal approach. As shown in Smith et al, "Metamaterials for surfaces and waveguides," previously cited, an arrangement of complementary M-type elements (such as "CSRR" elements) can provide an effective permittivity $\varepsilon_z$, and an arrangement of complementary E-type elements (such as "CELC" elements) can provide effective permeabilities $\mu_x$ and $\mu_y$ (or along any two directions parallel to the parallel plate waveguide). Alternatively or additionally, gradients of the permittivity $\varepsilon_z$ can be achieved by patterning a substrate dielectric within the parallel plate waveguide (e.g. with a varying density of air holes).

All of the above U.S. patents, U.S. patent application publications, U.S. patent applications, foreign patents, foreign patent applications and non-patent publications referred to in this specification and/or listed in any Application Data Sheet, are incorporated herein by reference, to the extent not inconsistent herewith.

One skilled in the art will recognize that the herein described components (e.g., steps), devices, and objects and the discussion accompanying them are used as examples for the sake of conceptual clarity and that various configuration modifications are within the skill of those in the art. Consequently, as used herein, the specific exemplars set forth and the accompanying discussion are intended to be representative of their more general classes. In general, use of any specific exemplar herein is also intended to be representative of its class, and the non-inclusion of such specific components (e.g., steps), devices, and objects herein should not be taken as indicating that limitation is desired.

With respect to the use of substantially any plural and/or singular terms herein, those having skill in the art can translate from the plural to the singular and/or from the singular to the plural as is appropriate to the context and/or application. The various singular/plural permutations are not expressly set forth herein for sake of clarity.

Aspects of the subject matter described herein are set out in the following numbered clauses:

1. An apparatus, comprising:

   a parallel plate waveguide having an input port region, an output port region, and a plurality of subwavelength apertures within one or more conducting surfaces of the parallel plate waveguide, the plurality of subwavelength apertures providing a respective plurality of individual electromagnetic responses;
   where the plurality of individual electromagnetic responses provides a substantially increased optical distance between the input port region and the output port region.

2. The apparatus of clause 1, wherein the substantially increased optical distance is an optical distance substantially greater than a physical distance between the input port region and the output port region times a refractive index of a substrate of the parallel plate waveguide.

3. The apparatus of clause 1, wherein the substantially increased optical distance corresponds to a substantially decreased physical distance between the input port region and the output port region.

4. The apparatus of clause 1, wherein the input port region and the output port region define an optical axis of the apparatus, and the substantially increased optical distance is an optical distance along the optical axis.

5. The apparatus of clause 4, wherein the plurality of individual electromagnetic responses provides an effective permeability in a direction parallel to the parallel plate waveguide and perpendicular to the optical axis.

6. The apparatus of clause 4, wherein the plurality of individual electromagnetic responses provides an effective permeability in a direction parallel to the parallel plate waveguide and parallel to the optical axis.

7. The apparatus of clause 4, wherein the plurality of individual electromagnetic responses provides an effective permittivity in a direction perpendicular to the parallel plate waveguide.

8. The apparatus of clause 4, wherein the plurality of individual electromagnetic responses provides an effective refractive index for wave propagation parallel to the optical axis substantially greater than an effective refractive index for wave propagation perpendicular to the optical axis.

9. The apparatus of clause 1, wherein the output port region includes a plurality of output ports, and further comprising:

   a plurality of transmission lines respectively coupled to the plurality of output ports and configured to feed a respective plurality of antennas.

10. The apparatus of clause 9, wherein the input port region includes a plurality of input ports, and wherein the parallel plate waveguide is configured to produce a substantially collimated output beam from the plurality of antennas responsive to exciting an input port selected from the plurality of input ports, the substantially collimated output beam having a beam direction that is a function of the selected input port.

11. The apparatus of clause 9, wherein the respective plurality of antennas is a respective plurality of patch antennas.

12. The apparatus of clause 9, further comprising:

   a plurality of electromagnetic emitters respectively coupled to the plurality of input ports.

13. The apparatus of clause 9, further comprising:

   a plurality of electromagnetic receivers respectively coupled to the plurality of input ports.

14. The apparatus of clause 1, wherein the plurality of individual electromagnetic responses includes a plurality of adjustable individual electromagnetic responses.

15. The apparatus of clause 14, wherein the adjustable individual electromagnetic responses are adjustable response to one or more external inputs.

16. The apparatus of clause 15, wherein the one or more external inputs includes one or more voltage inputs.

17. The apparatus of clause 10, wherein the plurality of individual electromagnetic responses includes a plurality of adjustable individual electromagnetic responses that are adjustable responsive to one or more external inputs, and the beam direction is an adjustable beam direction that is a function of the selected input port and the one or more external inputs.

18. The apparatus of clause 17, wherein the adjustable beam direction is adjustable to provide a beam direction in between unadjusted beam directions corresponding to the selected input port and an adjacent input port.

19. A method, comprising:

delivering an electromagnetic wave to a first port region of a parallel plate waveguide; and
compressing the electromagnetic wave as it propagates within the parallel plate waveguide from the first port region to a second port region by a coupling of the electromagnetic wave to a plurality of subwavelength apertures in a conducting surface of the parallel plate waveguide;
where the compressing includes compressing along an axis joining the first port region and the second port region.

20. The method of clause 19, further comprising:

receiving the compressed electromagnetic wave at a plurality of ports within the second port region;
propagating the received electromagnetic wave along a plurality of transmission lines respectively coupled to the plurality of ports to feed a respectively plurality of antennas; and
radiating a substantially collimated beam from the plurality of antennas responsive to the feeding;
where the substantially collimated output beam has a beam direction that is a function of a location of the delivering.

21. The method of clause 20, wherein:

the first port region includes a discrete plurality of input ports;
the delivering includes delivering the electromagnetic wave to an input port selected from the discrete plurality of input ports; and
the substantially collimated output beam has a beam direction that is a function of the selected input port.

22. The method of clause 21, further comprising:

adjusting the beam direction by adjusting the coupling to provide an apparent location of the delivering different than an actual location of the delivering, where the apparent location is in between the selected input port and an adjacent input port.

23. The method of clause 19, further comprising:

receiving electromagnetic energy at a plurality of antennas that feed a respective plurality of transmission lines; and
propagating the received electromagnetic energy along the plurality of transmission lines to provide the delivered electromagnetic wave to the first port region;
where a map of intensity of the compressed electromagnetic wave within the second port region as a function of location within the second port region corresponds to an angular radiation pattern of the received electromagnetic energy.

24. The method of clause 23, wherein the second port region includes a discrete plurality of output ports, and the method further comprises:

adjusting the coupling to provide an apparent location of an output port in between actual locations of adjacent output ports in the discrete plurality of output ports.

25. A method, comprising:

identifying a coordinate transformation that reduces the axial spatial extent of a waveguide lens;
determining electromagnetic medium parameters that correspond to the identified coordinate transformation; and

determining respective physical parameters for a plurality of apertures positionable in one or more conducting surfaces of the waveguide lens to provide effective electromagnetic medium parameters that substantially correspond to the determined electromagnetic medium parameters.

26. The method of clause 25, further comprising:

fabricating the waveguide lens with the plurality of apertures in the one or more conducting surfaces.

27. The method of clause 26, where the fabricating is fabricating by a printed circuit board process.
28. The method of clause 25, wherein the determining respective physical parameters includes determining according to one of a regression analysis and a lookup table.
29. The method of clause 25, wherein the determining of respective physical parameters includes determining geometrical parameters for the plurality of apertures.
30. The method of clause 25, wherein the determining of respective physical parameters includes determining resonant frequencies for the plurality of apertures.
31. The method of clause 25, wherein the waveguide lens is a Rotman lens.

While particular aspects of the present subject matter described herein have been shown and described, it will be apparent to those skilled in the art that, based upon the teachings herein, changes and modifications may be made without departing from the subject matter described herein and its broader aspects and, therefore, the appended claims are to encompass within their scope all such changes and modifications as are within the true spirit and scope of the subject matter described herein. Furthermore, it is to be understood that the invention is defined by the appended claims. It will be understood by those within the art that, in general, terms used herein, and especially in the appended claims (e.g., bodies of the appended claims) are generally intended as "open" terms (e.g., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to inventions containing only one such recitation, even when the same claim includes the introductory phrases "one or more" or "at least one" and indefinite articles such as "a" or "an" (e.g., "a" and/or "an" should typically be interpreted to mean "at least one" or "one or more"); the same holds true for the use of definite articles used to introduce claim recitations. In addition, even if a specific number of an introduced claim recitation is explicitly recited, those skilled in the art will recognize that such recitation should typically be interpreted to mean *at least* the recited number (e.g., the bare recitation of "two recitations," without other modifiers, typically means *at least* two recitations, or *two or more* recitations). Furthermore, in those instances where a convention analogous to "at least one of A, B, and C, etc." is used, in general such a construction is intended in the sense one having skill in the art would understand the convention (e.g., " a system having at least one of A, B, and C" would include but not be limited to systems that have A alone, B alone, C alone, A and B together, A and C together, B and C together, and/or A, B, and C together, etc.). In those instances where a convention analogous to "at least one of A, B, or C, etc." is used, in general such a construction is intended in the sense one having skill in the art would understand the convention (e.g., " a system having at least one of A, B, or C" would include but not be limited to systems that have A alone, B alone, C alone, A and B together, A and C together, B and C together, and/or A, B, and C together, etc.). It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

With respect to the appended claims, those skilled in the art will appreciate that recited operations therein may generally be performed in any order. Examples of such alternate orderings may include overlapping, interleaved, interrupted, reordered, incremental, preparatory, supplemental, simultaneous, reverse, or other variant orderings, unless context dictates otherwise. With respect to context, even terms like "responsive to," "related to," or other past-tense adjectives are generally not intended to exclude such variants, unless context dictates otherwise.

While various aspects and embodiments have been disclosed herein, other aspects and embodiments will be apparent to those skilled in the art.

**Claims**

1. An apparatus comprising a metamaterial waveguide structure, the metamaterial waveguide structure including:

   a parallel plate waveguide providing a Rotman lens having an input port region, an output port region, and a plurality of subwavelength apertures within one or more conducting surfaces of the parallel plate waveguide, the metamaterial waveguide structure including a plurality of complementary metamaterial elements patterned on a conductive surface of the waveguide and the plurality of subwavelength apertures providing a respective plurality of individual electromagnetic responses;
   where the plurality of individual electromagnetic responses provides a substantially increased optical distance between the input port region and the output port region, wherein the input port region and the output port region define an optical axis of the apparatus, and the substantially increased optical distance is an optical distance along the optical axis.

2. The apparatus of claim 1, wherein the plurality of individual electromagnetic responses provides an effective refractive index for wave propagation parallel to the optical axis substantially greater than an effective refractive index for wave propagation perpendicular to the optical axis.

3. The apparatus of claim 1 or claim 2, wherein the output port region includes a plurality of output ports, and further comprising:

   a plurality of transmission lines respectively coupled to the plurality of output ports and configured to feed a respective plurality of antennas.

4. The apparatus of claim 3, wherein the input port region includes a plurality of input ports, and wherein the parallel plate waveguide is configured to produce a substantially collimated output beam from the plurality of antennas responsive to exciting an input port selected from the plurality of input ports, the substantially collimated output beam having a beam direction that is a function of the selected input port.

5. The apparatus of claim 4, wherein the plurality of individual electromagnetic responses includes a plurality of adjustable individual electromagnetic responses that are adjustable responsive to one or more external inputs, and the beam direction is an adjustable beam direction that is a function of the selected input port and the one or more external inputs.

6. The apparatus of claim 5, wherein the adjustable beam direction is adjustable to provide a beam direction in between unadjusted beam directions corresponding to the selected input port and an adjacent input port.

7. The apparatus of any one of claims 3 to 6, wherein at least one of:

   the respective plurality of antennas is a respective plurality of patch antennas;
   a plurality of electromagnetic emitters are respectively coupled to the plurality of input ports;
   a plurality of electromagnetic receivers are respectively coupled to the plurality of input ports.

8. The apparatus of any one of claims 1 to 4, wherein the plurality of individual electromagnetic responses includes a plurality of adjustable individual electromagnetic responses, the adjustable individual electromagnetic responses being adjustable in response to one or more external inputs, for example one or more voltage inputs.

9. The apparatus of any one of the preceding claims, wherein at least one of:

   the substantially increased optical distance is at least one of an optical distance substantially greater than a physical distance between the input port region and the output port region times a refractive index of a substrate of the parallel plate waveguide;
   the substantially increased optical distance corresponds to a substantially decreased physical distance between the input port region and the output port region;
   the plurality of individual electromagnetic responses provides an effective permeability in at least one of:

   a direction parallel to the parallel plate waveguide and perpendicular to the optical axis;
   a direction parallel to the parallel plate waveguide and parallel to the optical axis;

a direction perpendicular to the parallel plate waveguide.

10. A method, comprising:

delivering, in a metamaterial waveguide structure, an electromagnetic wave to a first port region of a parallel plate waveguide providing a Rotman lens; and
compressing the electromagnetic wave as it propagates within the parallel plate waveguide from the first port region to a second port region by a coupling of the electromagnetic wave to a plurality of subwavelength apertures in a conducting surface of the parallel plate waveguide, wherein the plurality of subwavelength apertures provides a respective plurality of individual electromagnetic responses, said metamaterial waveguide structure including a plurality of complementary metamaterial elements patterned on a conductive surface of the waveguide;
where the compressing includes compressing along an axis joining the first port region and the second port region.

11. The method of claim 10, further comprising:

receiving the compressed electromagnetic wave at a plurality of ports within the second port region;
propagating the received electromagnetic wave along a plurality of transmission lines respectively coupled to the plurality of ports to feed a respectively plurality of antennas; and
radiating a substantially collimated beam from the plurality of antennas responsive to the feeding;
where the substantially collimated output beam has a beam direction that is a function of a location of the delivering.

12. The method of claim 11, wherein:

the first port region includes a discrete plurality of input ports;
the delivering includes delivering the electromagnetic wave to an input port selected from the discrete plurality of input ports; and
the substantially collimated output beam has a beam direction that is a function of the selected input port.

13. The method of claim 12, further comprising:

adjusting the beam direction by adjusting the coupling to provide an apparent location of the delivering different than an actual location of the delivering, where the apparent location is in between the selected input port and an adjacent input port.

14. The method of any one of claims 10 to 13, further comprising:

receiving electromagnetic energy at a plurality of antennas that feed a respective plurality of transmission lines; and
propagating the received electromagnetic energy along the plurality of transmission lines to provide the delivered electromagnetic wave to the first port region;
where a map of intensity of the compressed electromagnetic wave within the second port region as a function of location within the second port region corresponds to an angular radiation pattern of the received electromagnetic energy.

15. The method of claim 14, wherein the second port region includes a discrete plurality of output ports, and the method further comprises:

adjusting the coupling to provide an apparent location of an output port in between actual locations of adjacent output ports in the discrete plurality of output ports.

**Patentansprüche**

1. Vorrichtung, umfassend eine Metamaterial-Wellenleiterstruktur, wobei die Metamaterial-Wellenleiterstruktur einschließt:

einen Parallelplattenwellenleiter, der eine Rotman-Linse mit einer Eingabeportregion, einer Ausgabeportregion und einer Vielzahl von Blenden unter Wellenlänge innerhalb von einer oder mehreren leitenden Oberflächen des Parallelplattenwellenleiters bereitstellt, wobei die Metamaterial-Wellenleiterstruktur eine Vielzahl komplementärer Metamaterialelemente einschließt, die auf einer leitenden Oberfläche des Wellenleiters strukturiert sind, und wobei die Vielzahl von Blenden unter Wellenlänge eine jeweilige Vielzahl individueller elektromagnetischer Ansprechreaktionen bereitstellt;

wobei die Vielzahl der individuellen elektromagnetischen Ansprechreaktionen einen wesentlich erhöhten optischen Abstand zwischen der Eingabeportregion und der Ausgabeportregion bereitstellt, wobei die Eingabeportregion und die Ausgabeportregion eine optische Achse der Vorrichtung definieren und der wesentlich erhöhte optische Abstand ein optischer Abstand entlang der optischen Achse ist.

2. Vorrichtung nach Anspruch 1, wobei die Vielzahl der individuellen elektromagnetischen Ansprechreaktionen einen effektiven Brechungsindex für die Wellenausbreitung parallel zu der optischen Achse bereitstellt, der wesentlich größer als ein effektiver Brechungsindex für Wellenausbreitung senkrecht zu der optischen Achse ist.

3. Vorrichtung nach Anspruch 1 oder Anspruch 2, wobei die Ausgabeportregion eine Vielzahl von Ausgabeports einschließt und ferner umfasst:

eine Vielzahl von Übertragungsleitungen, die jeweils an die Vielzahl der Ausgabeports gekoppelt und ausgestaltet sind, um eine jeweilige Vielzahl von Antennen zu speisen.

4. Vorrichtung nach Anspruch 3, wobei die Eingabeportregion eine Vielzahl von Eingabeports einschließt, und wobei der Parallelplattenwellenleiter ausgestaltet ist, um einen im Wesentlichen kollimierten Ausgabestrahl aus der Vielzahl von Antennen zu produzieren, die auf das Anregen eines Eingabeports ausgewählt aus einer Vielzahl von Eingabeports ansprechen, wobei der im Wesentlichen kollimierte Ausgabestrahl eine Strahlrichtung aufweist, die eine Funktion des ausgewählten Eingabeports ist.

5. Vorrichtung nach Anspruch 4, wobei die Vielzahl von individuellen elektromagnetischen Ansprechreaktionen eine Vielzahl anpassbarer individueller elektromagnetischer Ansprechreaktionen einschließt, die anpassbar auf einen oder mehrere externe Eingaben ansprechen, und wobei die Strahlrichtung eine anpassbare Strahlrichtung ist, die eine Funktion des ausgewählten Eingabeports und der einen oder mehreren externen Eingaben ist.

6. Vorrichtung nach Anspruch 5, wobei die anpassbare Strahlrichtung anpassbar ist, um eine Strahlrichtung zwischen nichtangepassten Strahlrichtungen bereitzustellen, die dem ausgewählten Eingabeport und einem benachbarten Eingabeport entsprechen.

7. Vorrichtung nach einem der Ansprüche 3 bis 6, wobei mindestens eine von
der jeweiligen Vielzahl von Antennen eine jeweilige Vielzahl von Patchantennen ist;
eine Vielzahl von elektromagnetischen Emittern jeweils an die Vielzahl der Eingabeports gekoppelt ist;
eine Vielzahl von elektromagnetischen Empfängern jeweils an die Vielzahl der Eingabeports gekoppelt ist.

8. Vorrichtung nach einem der Ansprüche 1 bis 4, wobei die Vielzahl von individuellen elektromagnetischen Ansprechreaktionen eine Vielzahl von anpassbaren individuellen elektromagnetischen Ansprechreaktionen einschließt, wobei die anpassbaren individuellen elektromagnetischen Ansprechreaktionen in Reaktion auf eine oder mehrere externe Eingaben anpassbar sind, beispielsweise eine oder mehrere Spannungseingaben.

9. Vorrichtung nach einem der vorhergehenden Ansprüche, wobei mindestens einer von
dem wesentlich erhöhten optischen Abstand mindestens einer von einem optischen Abstand ist, der wesentlich größer als ein physikalischer Abstand zwischen der Eingabeportregion und der Ausgabeportregion mal einem Brechungsindex eines Substrats des Parallelplattenwellenleiters ist;
wobei der wesentlich erhöhte optische Abstand einem wesentlich verringerten physikalischen Abstand zwischen der Eingabeportregion und der Ausgabeportregion entspricht;
die Vielzahl der individuellen elektromagnetischen Ansprechreaktionen eine effektive Permeabilität in mindestens einer der folgenden bereitstellt:

einer Richtung parallel zu dem Parallelplattenwellenleiter und senkrecht zu der optischen Achse;
einer Richtung parallel zu dem Parallelplattenwellenleiter und parallel zu der optischen Achse;
einer Richtung senkrecht zu dem Parallelplattenwellenleiter.

**10.** Verfahren, umfassend:

Abgeben einer elektromagnetischen Welle an eine erste Portregion eines Parallelplattenwellenleiters, der eine Rotman-Linse bereitstellt, in einer Metamaterial-Wellenleiterstruktur; und
Komprimieren der elektromagnetischen Welle, wenn sie sich innerhalb des Parallelplattenwellenleiters von der ersten Portregion zu der zweiten Portregion ausbreitet, indem die elektromagnetische Welle an eine Vielzahl von Blenden unter Wellenlänge in einer leitenden Oberfläche des Parallelplattenwellenleiters gekoppelt wird, wobei die Vielzahl der Blenden unter Wellenlänge eine jeweilige Vielzahl individueller elektromagnetischer Ansprechreaktionen bereitstellt, wobei die Metamaterial-Wellenleiterstruktur eine Vielzahl komplementärer Metamaterialelemente einschließt, die auf einer leitenden Oberfläche des Wellenleiters strukturiert sind;
wobei das Komprimieren Komprimieren entlang einer Achse einschließt, die die erste Portregion und die zweite Portregion verbindet.

**11.** Verfahren nach Anspruch 10, ferner umfassend:

Empfangen der komprimierten elektromagnetischen Welle an einer Vielzahl von Ports innerhalb der zweiten Portregion;
Ausbreiten der empfangenen elektromagnetischen Welle entlang einer Vielzahl von Übertragungsleitungen, die jeweils an die Vielzahl von Ports gekoppelt sind, um eine jeweilige Vielzahl von Antennen zu speisen; und
Strahlen eines im Wesentlichen kollimierten Strahls aus der Vielzahl von Antennen in Reaktion auf das Speisen;
wobei der im Wesentlichen kollimierte Ausgabestrahl eine Strahlrichtung aufweist, die eine Funktion einer Position des Abgebens ist.

**12.** Verfahren nach Anspruch 11, wobei:

die erste Portregion eine diskrete Vielzahl von Eingabeports einschließt;
das Abgeben Abgeben der elektromagnetischen Welle an einen Eingabeport ausgewählt aus der diskreten Vielzahl von Eingabeports einschließt; und
der im Wesentlichen kollimierte Ausgabestrahl eine Strahlrichtung aufweist, die eine Funktion des gewählten Eingabeports ist.

**13.** Verfahren nach Anspruch 12, ferner umfassend:

Anpassen der Strahlrichtung durch Anpassen der Kopplung, um eine scheinbare Position der Abgabe bereitzustellen, die sich von einer tatsächlichen Position der Abgabe unterscheidet, wobei die scheinbare Position sich zwischen dem ausgewählten Eingabeport und einem benachbarten Eingabeport befindet.

**14.** Verfahren nach einem der Ansprüche 10 bis 13, ferner umfassend:

Empfangen von elektromagnetischer Energie an einer Vielzahl von Antennen, die eine jeweilige Vielzahl von Übertragungsleitungen speisen; und
Ausbreiten der empfangenen elektromagnetischen Energie entlang der Vielzahl von Übertragungsleitungen, um die abgegebene elektromagnetische Welle der ersten Portregion bereitzustellen;
wobei eine Intensitätskarte der komprimierten elektromagnetischen Welle innerhalb der zweiten Portregion als Funktion der Position innerhalb der zweiten Portregion einem Winkelstrahlungsmuster der empfangenen elektromagnetischen Energie entspricht.

**15.** Verfahren nach Anspruch 14, wobei die zweite Portregion eine diskrete Vielzahl von Ausgabeports einschließt und das Verfahren ferner umfasst:

Anpassen der Kopplung, um eine scheinbare Position eines Ausgabeports zwischen tatsächlichen Positionen von benachbarten Ausgabeports in der diskreten Vielzahl der Ausgabeports bereitzustellen.

**Revendications**

**1.** Appareil comprenant une structure de guide d'ondes en métamatériau, la structure de guide d'ondes en métamatériau comportant :

un guide d'ondes à plaques parallèles fournissant une lentille de Rotman ayant une région de ports d'entrée, une région de ports de sortie, et une pluralité d'ouvertures de sous-longueurs d'onde dans une ou plusieurs surfaces conductrices du guide d'ondes à plaques parallèles, la structure de guide d'ondes en métamatériau comportant une pluralité d'éléments en métamatériau complémentaires gravés sur une surface conductrice du guide d'ondes et la pluralité de sous-longueurs d'onde fournissant une pluralité respective de réponses électromagnétiques individuelles ;

dans lequel la pluralité de réponses électromagnétiques individuelles fournit une distance optique sensiblement accrue entre la région de ports d'entrée et la région de ports de sortie, dans lequel la région de ports d'entrée et la région de ports de sortie définissent un axe optique de l'appareil, et la distance optique sensiblement accrue est une distance optique le long de l'axe optique.

2. Appareil selon la revendication 1, dans lequel la pluralité de réponses électromagnétiques individuelles fournit un indice de réfraction efficace pour une propagation des ondes parallèlement à l'axe optique sensiblement supérieur à un indice de réfraction efficace pour une propagation des ondes perpendiculairement à l'axe optique.

3. Appareil selon la revendication 1 ou la revendication 2, dans lequel la région de ports de sortie comporte une pluralité de ports de sortie et comprenant en outre :

une pluralité de lignes de transmission couplées respectivement à la pluralité de ports de sortie et configurées pour alimenter une pluralité respective d'antennes.

4. Appareil selon la revendication 3, dans lequel la région de ports d'entrée comporte une pluralité de ports d'entrée, et dans lequel le guide d'onde à plaques parallèles est configuré pour produire un faisceau de sortie sensiblement collimaté depuis la pluralité d'antennes en réponse à l'excitation d'un port d'entrée sélectionné parmi la pluralité de ports d'entrée, le faisceau de sortie sensiblement collimaté ayant un sens de faisceau qui est fonction du port d'entrée sélectionné.

5. Appareil selon la revendication 4, dans lequel la pluralité de réponses électromagnétiques individuelles comporte une pluralité de réponses électromagnétiques individuelles ajustables qui peuvent être ajustées en réponse à une ou plusieurs entrées externes, et le sens du faisceau est un sens de faisceau ajustable qui est fonction du port d'entrée sélectionné et des une ou plusieurs entrées externes.

6. Appareil selon la revendication 5, dans lequel le sens de faisceau ajustable est ajustable pour fournir un sens de faisceau entre des sens de faisceau non ajustés correspondant au port d'entrée sélectionné et à un port d'entrée adjacent.

7. Appareil selon l'une quelconque des revendications 3 à 6, dans lequel au moins l'un de :

la pluralité respective d'antennes est une pluralité respective d'antennes patch ;
une pluralité d'émetteurs électromagnétiques est respectivement couplée à la pluralité de ports d'entrée ;
une pluralité de récepteurs électromagnétiques est couplée respectivement à la pluralité de ports d'entrée.

8. Appareil selon l'une quelconque des revendications 1 to 4, dans lequel la pluralité de réponses électromagnétiques individuelles comporte une pluralité de réponses électromagnétiques individuelles ajustables, les réponses électromagnétiques individuelles ajustables étant ajustables en réponse à une ou plusieurs entrées externes, par exemple une ou plusieurs entrées de tension.

9. Appareil selon l'une quelconque des revendications précédentes, dans lequel au moins l'un de :

la distance optique sensiblement accrue est au moins l'une d'une distance optique sensiblement supérieure à une distance physique entre la région de ports d'entrée et la région de ports de sortie multipliée par un indice de réfraction d'un substrat du guide d'ondes à plaques parallèles ;
la distance optique sensiblement accrue correspond à une distance physique sensiblement réduite entre la région de ports d'entrée et la région de ports de sortie ;
la pluralité de réponses électromagnétiques individuelles fournit une perméabilité efficace dans au moins l'un d'un :

sens parallèle au guide d'onde à plaques parallèles et perpendiculaire à l'axe optique ;

sens parallèle au guide d'onde à plaques parallèles et parallèle à l'axe optique ;
sens perpendiculaire au guide d'ondes à plaques parallèles.

**10.** Procédé, comprenant :

la délivrance, dans une structure de guide d'ondes en métamatériau, d'une onde à une première région de ports d'un guide d'onde à plaques parallèles fournissant une lentille de Rotman ; et
la compression de l'onde électromagnétique durant sa propagation à l'intérieur du guide d'onde à plaques parallèles de la première région de ports jusqu'à une seconde région de ports par couplage de l'onde électromagnétique à une pluralité d'ouvertures de sous-longueurs d'onde dans une surface conductrice du guide d'ondes à plaques parallèles, dans lequel la pluralité d'ouvertures de sous-longueurs d'onde fournit une pluralité respective de réponses électromagnétiques individuelles, ladite structure de guide d'ondes en métamatériau comportant une pluralité d'éléments en métamatériau complémentaires gravés sur une surface conductrice du guide d'ondes ;
dans lequel la compression comporte la compression le long d'un axe joignant la première région de ports et la seconde région de ports.

**11.** Procédé selon la revendication 10, comprenant en outre :

la réception de l'onde électromagnétique compressée à une pluralité de ports dans la seconde région de ports ;
la propagation de l'onde électromagnétique reçue le long d'une pluralité de lignes de transmission couplée respectivement à la pluralité de ports pour alimenter une pluralité respective d'antennes ; et
le rayonnement d'un faisceau sensiblement collimaté depuis la pluralité d'antennes en réponse à l'alimentation ;
dans lequel le faisceau de sortie sensiblement collimaté a un sens de faisceau qui est fonction d'un emplacement de la délivrance.

**12.** Procédé selon la revendication 11, dans lequel

la première région de ports comporte une pluralité discrète de ports d'entrée ;
la délivrance comporte la délivrance de l'onde électromagnétique à un port d'entrée sélectionné parmi la pluralité discrète de ports d'entrée ; et
le faisceau de sortie sensiblement collimaté a un sens de faisceau qui est fonction du port d'entrée sélectionné.

**13.** Procédé selon la revendication 12, comprenant en outre :

l'ajustement du sens du faisceau en ajustant le couplage afin de fournir un emplacement de délivrance apparent différent d'un emplacement de délivrance réel, dans lequel l'emplacement apparent est situé entre le port d'entrée sélectionné et un port d'entrée adjacent.

**14.** Procédé selon l'une quelconque des revendications 10 à 13, comprenant en outre :

la réception d'une énergie électromagnétique au niveau d'une pluralité d'antennes qui alimentent une pluralité respective de lignes de transmission ; et
la propagation de l'énergie électromagnétique reçue le long de la pluralité de lignes de transmission pour fournir l'onde électromagnétique délivrée à la première région de ports ;
dans lequel une carte d'intensité de l'onde électromagnétique compressée à l'intérieur de la seconde région de ports en fonction de l'emplacement dans la seconde région de ports correspond à un diagramme de rayonnement angulaire de l'énergie électromagnétique reçue.

**15.** Procédé selon la revendication 14, dans lequel la seconde région de ports comporte une pluralité discrète de ports de sortie, et le procédé comprend en outre :

l'ajustement du couplage pour fournir un emplacement apparent d'un port de sortie entre des emplacements réels de ports de sortie adjacents dans la pluralité discrète de ports de sortie.

FIGS. 1 (a)-(d)

FIGS. 2 (a)-(c)

FIGS. 3 (a)-(b)

FIGS. 4 (a)-(c)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 7724197 B
- US 20100156573 A
- US 20080024792 A
- US 7733289 B
- US 20090296237 A


### Non-patent literature cited in the description

- **S. WEISS ; A. ZAGHLOUL ; O. KILIC ; E. D. ADLER.** Realization of Rotman's concepts of beamformer lenses and artificial dielectric materials. *IEEE International Conference on Microwaves, Communications, Antennas and Electronics Systems,* 2009, 1
- **N. KUNDTZ ; D. ROBERTS ; D. R. SMITH.** Optical lens compression via transformation optics. *Optics Express,* 2009, vol. 17, 16535
- **B. JUSTICE ; S. CUMMER ; J. PENDRY ; A. STARR ; D. SCHURIG ; J. MOCK ; D. SMITH.** Metamaterial electromagnetic cloak at microwave frequencies. *Physical Review Latters,* 2006, vol. 314, 977
- **J. B. PENDRY ; D. SCHURIG ; D. R. SMITH.** Transformation-designed optical elements. *Optics Express,* 2007, vol. 15, 14772
- **R. GATTI ; R. SORRENTINO ; E. SBARRA ; L. MARCACCIOLI.** A novel rotman lens in siw technology. *European Microwave Conference,* 2007, 1515
- **M. LASO ; J. BAENA ; J. BONACHE ; M. BERUETE ; R. MARQUES ; F. MARTYN ; F. FALCONE ; T. LOPETEGI ; M. SOROLLA.** Babinet principle applied to the design of metasurfaces and metamaterials. *Physical Review Letters,* 2004, vol. 93, 1
- **D. SCHURIG ; J. B. PENDRY ; D. R. SMITH.** Controlling electromagnetic fields. *Science,* 2006, vol. 312, 1780
- **T. ZENTGRAF ; G. BARTAL ; J. VALENTINE ; J. LI ; X. ZHANG.** *Nature Materials,* 2009, vol. 8, 568
- **N. KUNDTZ ; D. R. SMITH.** *Nature Materials,* 2009, vol. 92, 129
- **C. POITRAS ; L. GABRIELL ; J. CARDENAS ; M. LIPSON.** *Nature Photonics,* 2009, vol. 117, 461
- **H. HANSENB ; L. HALLA ; D. ABBOTTA.** Rotman lens for mm-wavelengths. *Proc. of SPIE,* 2002, vol. 4935, 215
- **J. LI ; J. B. PENDRY.** *Physical Review Letters,* 2008, vol. 101, 203901
- **L. MUSA ; M.S. SMITH.** Microstrip port design and sidewall absorption for printed rotman lenses. *IEEE Proceedings,* 1989, vol. 136, 53
- **P. SHARMA ; P. SINGHAL ; R. GUPTA.** Rotman lens with equal height of array and feed contours. *Proc. Of SPIE,* 2003, vol. 51, 2048
- **H. FENG ; Q. CHENG ; T.J. CUI.** Broadband planar luneburg lens based on complementary metamaterials. *Physical Review Letters,* 2009, vol. 95, 1
- **W. ROTMAN ; R. F. TURNER.** Wide-angle microwave lens for line source applications. *IEEE Transactions on Antennas and Propagation,* 1963, 623
- **L. SCHULWITZ ; A. MORTAZAWI.** A new low loss rotman lens design using a graded dielectric substrate. *IEEE Transactions on Microwave Theory and Techniques,* 2008, vol. 56, 2734